# EUROPÄISCHE PATENTANMELDUNG

(11) **EP 1 421 840 A1**
(43) Veröffentlichungstag der Anmeldung: **26.05.2004**
(21) Anmeldenummer: 03026393.3
(22) Anmeldetag: 18.11.2003
(51) Int. Cl.: A01D 34/416

(54) **Schneidkopf für Motorsensen**

(30) Priorität: 19.11.2002 DE 10254058; 19.12.2002 DE 10259467
(71) Anmelder: Manfred Sälinger GmbH Maschinen- und Apparatebau, 77652 Offenburg (DE)
(72) Erfinder: Sälinger, Manfred, 77652 Offenburg (DE)
(74) Vertreter: Maucher, Wolfgang, Dipl.-Ing.

(57) **Zusammenfassung**

Ein Schneidkopf (1) für Motorsensen, der einen Anschluss (3) zum Verbinden mit einem Dreh-Antrieb aufweist, hat ein Schneidkopf-Gehäuse (2) und ein oder mehrere Schneidelemente (7) und wenigstens eine Klemmvorrichtung (8) zum Halten von jeweils einem Schneidelement (7), wobei die Klemmvorrichtung (8) einen in Klemmrichtung federbeaufschlagten, bewegbaren Klemmkörper (9) und ein Widerlager aufweist, zwischen denen ein Schneidelement (7) festklemmbar ist. Die Schneidelemente (7) stehen dabei etwa radial außen über das Schneidkopf-Gehäuse (2) über. Die Klemmvorrichtung (8) weist zwei zueinander bewegbare, zwischen sich ein Schneidelement (7) festklemmende Klemmkörper (9) auf, die jeweils in Klemmrichtung federbeaufschlagt sind.

## Beschreibung

Die Erfindung betrifft einen drehbaren Schneidkopf für Motorsensen, der einen Anschluss zum Verbinden mit einem Dreh-Antrieb aufweist, mit einem Schneidkopf-Gehäuse und mit einem oder mehreren Schneidelementen und mit wenigstens einer Klemmvorrichtung zum Halten von jeweils einem Schneidelement, wobei die Klemmvorrichtung einen in Klemmrichtung federbeaufschlagten, bewegbaren Klemmkörper und ein Widerlager aufweist, zwischen denen ein Schneidelement festklemmbar ist und wobei die Schneidelemente etwa radial außen über das Schneidkopf-Gehäuse überstehen.

Derartige Schneidköpfe sind bekannt. Darunter gibt es Schneidköpfe mit automatisierter Fadenabspulung, bei der das als Faden ausgebildete Schneidelement für eine problemlose Fadenabspulung im Querschnitt klein gehalten werden muss und dadurch in der Schneidleistung begrenzt ist. Schneidköpfe mit größeren Schneidelementquerschnitten müssen bei einem Schneidelementwechsel auseinandergeschraubt werden, wofür spezielles Werkzeug benötigt wird sowie Zeitaufwand entsteht.
Bei den bekannten Schneidköpfen für Motorsensen mit größeren Schneidelementquerschnitten, beispielsweise aus EP 0 824 854 B1, ist die Halterung des Schneidelements durch einen Klemmkörper und einem damit zusammenwirkenden festen Widerlager nur für eine Drehrichtung optimal, in der anderen Drehrichtung werden die Haltekräfte des Klemmkörpers durch auftretende entgegengesetzte Zentrifugalkräfte abgeschwächt. Außerdem ist bei dem beschriebenen Schneidkopf durch die dort angewandte Gehäusekonstruktion ein Abscheren der Schneidelemente beim Anstoßen des Schneidkopfes an ein Hindernis leicht möglich.

Es besteht daher die Aufgabe, einen Schneidkopf für Motorsensen zu schaffen, bei dem in beiden Drehrichtungen die Schneidelemente sicher gehalten werden sowie die Betriebssicherheit erhöht und auch die Handhabung verbessert ist.

Die erfindungsgemäße Lösung dieser Aufgabe besteht im wesentlichen darin, dass die Klemmvorrichtung zwei zueinander bewegbare, zwischen sich ein Schneidelement festklemmende Klemmkörper aufweist, die jeweils in Klemmrichtung federbeaufschlagt sind. Dadurch kann das Schneidelement unabhängig von der Drehrichtung und den damit jeweils in verschiedenen Richtungen auftretenden Beschleunigungskräften ohne Nachlassen der Haltekräfte in der Klemmvorrichtung gehalten werden, da beide Klemmkörper bewegbar gelagert sind und dadurch die auftretenden Beschleunigungskräfte in beiden Richtungen gemeinsam aufnehmen beziehungsweise ausgleichen können. Die Position zueinander und dadurch auch die Haltekraft für das Schneidelement kann jedoch unabhängig von der Drehrichtung gleich bleiben. Ein so beschaffener Schneidkopf kann an vielen verschiedenen Arten von Motorsensen betrieben werden, also auch an Motorsensen mit unterschiedlicher Drehrichtung und ist insbesondere als Austauschteil flexibel einsetzbar.

Dabei ist es vorteilhaft, wenn die Klemmkörper schwenkbar sind, wenn die Schwenkachsen der Klemmkörper etwa parallel zur Rotationsachse des Schneidkopfes verlaufen und wenn der Massenschwerpunkt des Klemmkörpers einen geringeren Abstand zu der zum Schneidelement weisenden Beaufschlagungsseite des Klemmkörpers aufweist als die Schwenkachse des Klemmkörpers. Durch die am Schneidelement wirkenden Fliehkräfte, die Haftreibung zwischen dem eingeklemmten Schneidelement und den Klemmkörpern und der Hebelwirkung der Klemmkörper können die Klemmkörper weiter aufeinander zu bewegt werden und können so das Schneidelement noch stärker festklemmen.

Eine andere Ausführungsform kann darin bestehen, dass für die Klemmkörper Führungselemente vorgesehen sind und dass die Klemmkörper durch die Führungselemente verschiebbar gelagert sind.

Dabei ist es vorteilhaft, wenn die Längsachse der Führungselemente schräg, vorzugsweise etwa 45° zur Längsachse der Schneidelemente verläuft. Durch diese schräge Anordnung können die Klemmkörper beim Einführen der Schneidelemente entlang der Führungselemente entgegen der Federkraft zurückverschoben werden, damit das Schneidelement in den Zwischenraum zwischen zwei Klemmkörper passt. Beim Einwirken der Zentrifugalkraft auf das Schneidelement können sich die Klemmkörper mit dem Schneidelement verspannen und es dadurch festklemmen. Dabei kann die schräge Anordnung zweier zusammengehörender Klemmkörper zur Längsachse des Schneidelements so sein, dass sich der von den Verschiebungsachsen der beiden Klemmkörper eingeschlossene Winkel entweder nach außen, das heißt zur Außenseite des Schneidkopfes hin oder aber nach innen, das heißt zum Mittelpunkt des Schneidkopfes hin öffnet.

Eine zweckmäßige Ausgestaltung der Führungselemente kann dabei darin bestehen, dass die Führungselemente jeweils durch ein Langloch sowie einen in das Langloch eingreifenden Führungszapfen gebildet sind. Der Führungszapfen kann dabei im Querschnitt länglich in Erstreckungsrichtung des Langlochs geformt sein, sodass dadurch die Verschiebungsrichtung des Klemmkörpers vorgegeben ist.

Dabei kann sich das Langloch entweder in dem Klemmkörper befinden und der Führungszapfen mit dem Gehäuse verbunden sein oder aber das Langloch kann sich im Gehäuse befinden und der in das Langloch eingreifende Führungszapfen kann mit dem Klemmkörper verbunden sein.

Eine andere zweckmäßige Ausgestaltung der Führungselemente kann darin bestehen, dass die Führungselemente durch jeweils zwei parallele, zwischen sich den Klemmkörper führende Begrenzungen gebildet sind. Die Begrenzungen können dabei an beiden Seiten neben dem Klemmkörper angeordnet sein. Die Klemmkörper können dabei an den Wänden der Begrenzungen entlanggleiten, wobei die Achse, zu der beide Begrenzungen parallel ausgerichtet sind, die Verschiebungsachse der Klemmkörper vorgibt. Auch diese Art der Führung der Klemmkörper kann wegen der geringen mechanischen Belastung der Führungselemente durch die Klemmkörper langzeitig haltbar sein.

Eine weitere vorteilhafte Ausführungsform kann darin bestehen, dass die Führungselemente durch jeweils zwei parallele Nuten sowie in die Nuten eingreifende Führungszapfen gebildet sind. Dabei können die Führungszapfen vorzugsweise an dem Klemmkörper angeordnet sein, während die zwei parallelen Nuten, in die die Führungszapfen eingreifen, im Gehäuse angebracht sein können. Alternativ ist auch die umgekehrte Anordnung möglich, bei der die zwei parallelen Nuten im Klemmkörper angebracht sind und die darin eingreifenden Führungszapfen am Gehäuse angeordnet sind. Bei dieser Kombination zweier Nuten mit zwei entsprechenden Führungszapfen können sich die Klemmkörper leicht in der Verlaufsrichtung der Nuten verschieben und es kann ein Verdrehen oder Verkanten der Klemmkörper während dieser Verschiebung vermieden werden.

Um die Schneidelemente noch besser gegen ein Verrutschen in den Klemmvorrichtungen durch die im Betrieb auftretenden Fliehkräfte zu sichern beziehungsweise die Haltekraft zwischen Schneidelement und den Klemmkörpern zu vergrößern, ist es vorteilhaft, wenn die Klemmkörper an ihrer Beaufschlagungsseite profiliert sind und vorzugsweise quer zur Längserstreckung des zu haltenden Schneidelements Zähne oder Rillen oder dergleichen Profilierungen aufweisen.

Dabei können die Klemmkörper zweckmäßigerweise mit ihren profilierten Beaufschlagungsseiten in Klemmstellung formschlüssig in das Schneidelement eingreifen und die Schneidelemente dabei elastisch verformen. Durch diese Verformung kann der Kraftschluss zwischen Klemmkörper und Schneidelement weiter verstärkt werden.

Besonders zweckmäßig für eine einfache und kostengünstige Konstruktion des erfindungsgemäßen Schneidkopfes ist es, wenn die Klemmkörper durch Druckfedern auf der vom Schneidelement abweisenden Seite beaufschlagt sind und wenn für die Druckfedern zweier Klemmkörper, deren vom Schneidelement abweisende Seiten zueinander weisen, eine gemeinsame Federabstützung vorgesehen ist.

Um das Einführen von neuen Schneidelementen zwischen die Klemmkörper zu erleichtern, ist es vorteilhaft, wenn ein Anschlag für die Klemmkörper zur Begrenzung der Schwenkbewegung der Klemmkörper jeweils zum Schneidelement hin vorgesehen ist. Dadurch bleibt beim Entfernen des alten Schneidelementes zwischen zwei zusammenwirkenden Klemmkörpern ein Spalt bestehen, in den das neue Schneidelement leicht eingeführt werden kann. Gleichzeitig kann durch einen solchen Anschlag bewirkt werden, dass die die Klemmkörper beaufschlagenden Druckfedern stets vorgespannt bleiben und beim Wechsel der Schneidelemente nicht so stark entlastet werden können, dass die Gefahr des Herausfallens oder Herausspringens aus der Einbauposition zwischen Klemmkörper und Federabstützung besteht.

Für eine hohe Schneidleistung des Schneidkopfes ist es vorteilhaft, wenn mehrere, insbesondere sechs Schneidelemente mit jeweils zwei Klemmkörpern, gleichmäßig am Umfang des Schneidkopfes verteilt, angeordnet sind. Dadurch kann in der Praxis auch beim Verlust von ein oder zwei Schneidelementen, beispielsweise durch Abnutzung, trotzdem noch eine ausreichende Schneidleistung erzielt werden.

Ebenso ist es für eine hohe Schneidleistung zweckmäßig, wenn sich die Schneidelemente aus Austrittsöffnungen in einer Seitenwand des Gehäuses etwa radial nach außen, insbesondere etwa einhundertfünfzig bis einhundertsechzig Millimeter erstrecken. Mit kürzeren Schneidelementen kann der freizuschneidende Bereich nicht mehr so effektiv bearbeitet werden, längere Schneidelemente können im äußeren Endbereich zu schnell abgenutzt werden.

Um ein Abscheren der Schneidelemente beim Anstoßen des Schneidkopfes an ein größeres Hindernis zu vermeiden, ist es vorteilhaft, wenn das Gehäuse am Außenumfang umlaufend wenigstens einen Schutzrand aufweist, der radial über die Seitenwand mit ihren Austrittsöffnungen für die Schneidelemente übersteht. Dadurch berührt der Schutzrand als Erstes das Hindernis und das Schneidelement kann sich an die noch vom Hindernis entfernte Seitenwand anlegen und so nicht umknicken.

Einen noch größeren Schutz vor dem Abscheren der Schneidelemente an Hindernissen bieten zwei radial überstehende Schutzränder, die axial benachbart an beiden Seiten der Austrittsöffnungen angeordnet sind. Dadurch kann auch bei schräg gehaltener Motorsense mit damit auch schräg zum Untergrund und beispielsweise zu einer Wand als Hindernis stehendem Schneidkopf ein Abscheren der Schneidelemente verhindert werden.

Vorteilhaft ist es dabei, wenn der radiale Überstand des oder der Schutzränder über die Seitenwand mit ihren Austrittsöffnungen mindestens etwa dem Querschnitt der Schneidelemente entspricht. Dadurch können sich die Schneidelemente leicht in den Zwischenraum zwischen die weiter nach außen stehenden Schutzränder an die Seitenwand anlegen und sind dadurch gegen ein Abscheren geschützt.

Um die Knickbelastung der Schneidelemente bei diesem Anlegen an die Seitenwand zu reduzieren, ist es zweckmäßig, wenn die Außenränder der Austrittsöffnungen in der Seitenwand abgeschrägt oder abgerundet sind. Besonders bei Schneidelementen mit relativ großen Querschnittsmaßen kann dies von Vorteil sein, um eine langzeitige Haltbarkeit zu erreichen.

Für eine langzeitig hohe Schneidleistung des Schneidkopfes ist es zweckmäßig, wenn die Schneidelemente aus glasfaserverstärktem Kunststoff bestehen. Derartige Kunststoffmaterialien weisen eine hohe Steifigkeit auf und sind gleichzeitig kostengünstig herstellbar. Durch die lange Haltbarkeit der Schneidelemente können die Wechselintervalle der Schneidelemente verlängert werden.

Um die Masse des Schneidkopf klein zu halten und damit die Handhabbarkeit der Motorsense zu verbessern, ist es vorteilhaft, wenn die das Gehäuse des Schneidkopfes bildenden Teile aus Kunststoff bestehen. Kunststoff weist für diesen Einsatzzweck eine ausreichend hohe Festigkeit auf und ist gleichzeitig etwas elastisch, um Belastungen durch Stöße oder dergleichen auffangen zu können. Auch die Klemmvorrichtung kann für eine Gewichtsreduzierung entsprechend zweckmäßig gestaltet werden, indem die Klemmkörper aus Leichtmetall, insbesondere aus Aluminium bestehen.

Ebenso wird die Handhabbarkeit des Schneidkopfes verbessert, wenn die in Betriebsstellung nach unten weisende Seite des Schneidkopfes in einem Bereich, der sich nach innen radial beabstandet oder anschließend an die Klemmvorrichtungen befindet, offen ist und die darin radial nach innen überstehenden Enden der Schneidelemente zugänglich sind. Dadurch kann leicht und ohne Werkzeug ein Wechsel der Schneidelemente stattfinden, indem die Schneidelemente an ihren Enden, die in den frei zugänglichen Bereich ragen, herausgezogen werden oder aber auch einfach durch das Einführen eines neuen Schneidelementes in die Austrittsöffnungen und in die dahinter befindliche Klemmvorrichtung von außen. Das alte Schneidelement kann dadurch nach innen durchgeschoben werden und kann nach unten aus dem Schneidkopf herausfallen. Ein umständliches Öffnen des Schneidkopfes zum Wechseln der Schneidelemente ist dadurch nicht mehr erforderlich.

Nachstehend sind Ausführungsbeispiele der Erfindung anhand der Zeichnung näher beschrieben. Es zeigt in zum Teil schematisierter Darstellung:
- Fig. 1: eine perspektivische Darstellung eines erfindungsgemäßen Schneidkopfes in einer Ansicht von oben,
- Fig. 2: eine perspektivische Darstellung des Schneidkopfes in einer Ansicht von unten, der Schneidkopf ist im Vergleich zu Fig. 1 um 180° gedreht dargestellt,
- Fig. 3: eine Ansicht des Schneidkopfes von unten mit zwei eingesetzten Schneidelementen,
- Fig. 4: eine vergrößerte Darstellung des strichliniert gekennzeichneten Bereiches aus Fig. 3,
- Fig. 5: eine Ansicht des Schneidkopfes von unten mit einem Führungszapfen und einem Langloch im Klemmkörper als Führungselemente, durch die die Klemmkörper verschiebbar gelagert sind sowie
- Fig. 6: eine Ansicht des Schneidkopfes von unten mit zwei parallelen Begrenzungen als Führungselemente, durch die die Klemmkörper verschiebbar gelagert sind.

Ein im Ganzen mit 1 bezeichneter Schneidkopf für Motorsensen hat ein Gehäuse 2, welches einen Anschluss für einen Dreh-Antrieb 3 aufweist sowie Klemmvorrichtungen 8, in denen Schneidelemente 7 zwischen zwei federbeaufschlagten, bewegbaren Klemmkörpern 9 gehalten sind. Je nach Drehrichtung, in der der Schneidkopf 1 betrieben wird, gleichen die beiden zusammengehörenden Klemmkörper 9 über gemeinsam ausgeführte Bewegungen zusammen mit dem festgeklemmten Schneidelement 7 die angreifenden Kräfte aus und ermöglichen dadurch unabhängig von der Drehrichtung einen sicheren Halt des Schneidelements 7.

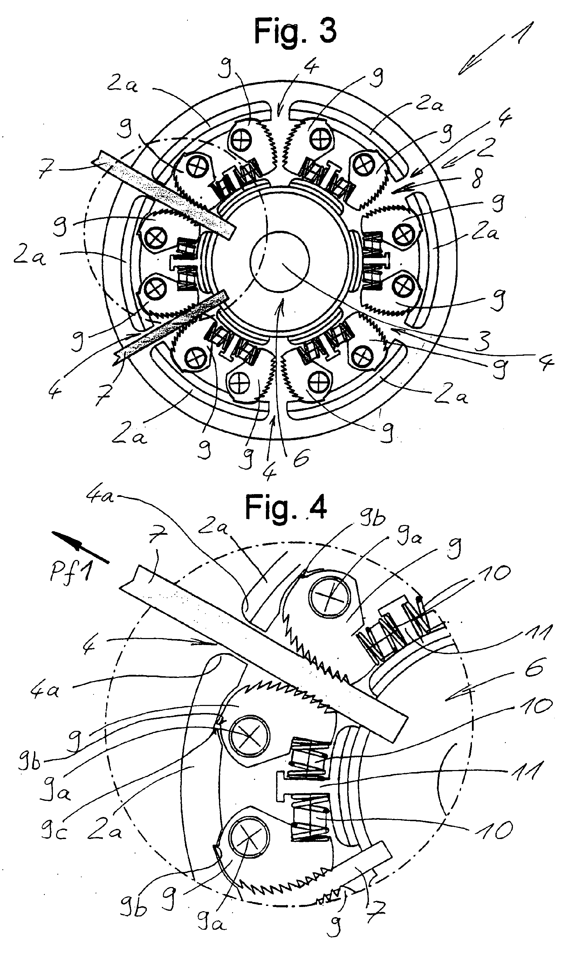

Wie in Fig. 3 und 4 erkennbar ist, sind die parallel zur Rotationsachse des Schneidkopfes 1 verlaufenden Schwenkachsen 9a der in diesem Ausführungsbeispiel schwenkbar gelagerten Klemmkörper 9 so angeordnet und die Form des Klemmkörpers 9 so gestaltet, dass der (nicht dargestellte) Massenschwerpunkt des Klemmkörpers 9 einen geringeren Abstand zu der zum Schneidelement 7 weisenden Beaufschlagungsseite des Klemmkörpers 9 hat als die Schwenkachse 9a des Klemmkörpers 9.

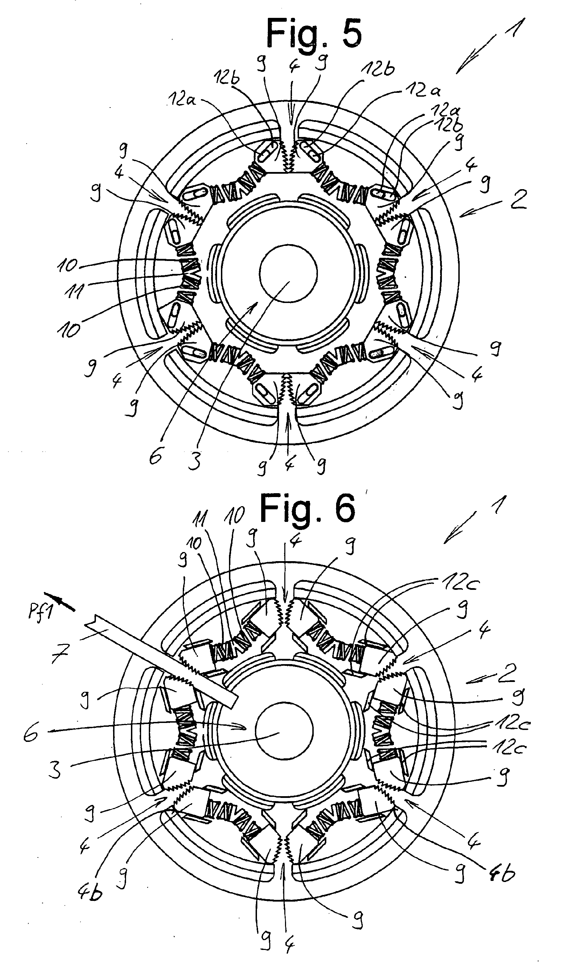

In Fig. 5 und 6 sind zwei Ausführungsbeispiele dargestellt, bei denen die Klemmkörper 9 durch Führungselemente 12a, 12b bzw. 12c verschiebbar gelagert sind. Dabei verläuft die Längsachse der Führungselemente 12a, 12b, 12c und damit auch die Verschiebungsachse der Klemmkörper 9 schräg, in den gezeigten Ausführungsformen ca. 45°, zur Längsachse der Schneidelemente 7. Eine nicht gezeigte Ausführung kann auch darin bestehen, dass die zur Längsachse der Schneidelemente 7 derart schräg angeordnet sind, dass sich der von den Verschiebungsachsen der Klemmkörper 9 eingeschlossene etwa rechte Winkel zur Außenseite des Schneidkopfes 1 hin öffnet und nicht wie in der gezeigten Ausführung zur Innenseite beziehungsweise zum Mittelpunkt des Schneidkopfes 1 hin.

Fig. 5 zeigt dabei eine Ausführungsform, bei der die Führungselemente 12a, 12b für jeweils einen Klemmkörper 9 durch einen Führungszapfen 12a und ein dazu passendes Langloch 12b im Klemmkörper 9 gebildet ist. Der Führungszapfen 12a ist dabei im Querschnitt länglich mit einer zumindest bereichsweise gerade verlaufenden Außenkante gestaltet und greift in das Langloch 12b ein. Um eine Verschiebung des Klemmkörpers 9 mit seinem Langloch 12b entlang des Führungszapfens 12a zu ermöglichen, ist das Langloch 12b in seiner Längserstreckung größer als der länglich geformte Führungszapfen 12a. Dabei bestimmt die Längsachse des Führungszapfens 12a und des Langloches 12b die Verschiebungsrichtung des Klemmkörpers 9. Der Abstand der beiden Führungszapfen 12a von zwei zueinander gehörenden Klemmkörper 9, die ein Schneidelement 7 zwischen sich festklemmen, bestimmt den Abstand zwischen beiden Klemmkörpern 9, wenn kein Schneidelement 7 zwischen den Klemmkörpern 9 eingeklemmt ist. Dieser Abstand ist dabei so gewählt, dass das Schneidelement 7 relativ leicht einführbar ist, die Klemmkraft der federbeaufschlagten Klemmkörper 9 auf das Schneidelement 7 aber ausreichend groß ist.

Die in Fig. 6 gezeigte Ausführungsform zeigt, dass jeweils ein Klemmkörper 9 zwischen zwei parallelen Begrenzungen 12c geführt ist. Die Klemmkörper 9 gleiten dabei mit ihren Außenseiten an den Innenwänden der Begrenzungen 12c entlang. Dabei bestimmt die Ausrichtung der wandförmigen Begrenzungen 12c die Verschiebungsrichtung der Klemmkörper 9. Der nach innen weisende Rand 4b der Austrittsöffnung 4 für die Schneidelemente 7 dient dabei als Anschlag für die federbeaufschlagten Klemmkörper 9, damit zwischen zwei zusammengehörenden Klemmkörpern 9 ohne zwischenliegendes Schneidelement noch ein Abstand erhalten bleibt, sodass das Einführen eines Schneidelementes 7 einfach möglich ist.

Fig. 4 zeigt die Profilierung der Klemmkörper 9 an ihrer zum Schneidelement 7 weisenden Beaufschlagungsseite. In diesem Ausführungsbeispiel besteht die Profilierung aus zahnartigen Rastelementen mit dazwischenliegenden Einkerbungen, die quer zur Längserstreckung des Schneidelementes 7 verlaufen. Die Profilierung kann in das elastische Kunststoffmaterial der Schneidelemente 7 formschlüssig eingreifen und es dabei verformen, wodurch die Schneidelemente 7 gegen auftretende Fliehkräfte, die durch den Pfeil Pf1 dargestellt sind, gesichert sind. Außerdem sind hier die zahnartigen Rastelemente leicht radial nach innen und damit entgegen den wirkenden Fliehkräften geneigt, was den Verzahnungseffekt beim Betrieb des Schneidkopfes 1 noch weiter verstärkt.

Ebenfalls in Fig. 4 ist die Federbeaufschlagung der Klemmkörper dargestellt, die in diesem Ausführungsbeispiel mit Druckfedern 10 bewirkt wird, die die Klemmkörper 9 auf der vom Schneidelement 7 abweisenden Seite beaufschlagen. Dabei ist für zwei Druckfedern 10 zweier benachbarter Klemmkörper 9, deren vom Schneidelement 7 abweisende Seiten zueinander weisen, eine gemeinsame Federabstützung 11 vorgesehen, die zwischen beiden Druckfedern 10 angeordnet ist. Durch diese Konstruktion der Klemmvorrichtung 8 mit federbeaufschlagten Klemmkörpern 9 ist es auch möglich, Schneidelemente mit unterschiedlichen Querschnitten zu verwenden. In Fig. 3 und 4 sind zwei Schneidelemente 7 mit unterschiedlichen Querschnitten, in den Klemmvorrichtungen 8 gehalten sind, dargestellt.
Am Außenumfang der Klemmkörper 9 ist außerdem ein Anschlag 9b vorgesehen, der die Schwenkbewegung des Klemmkörpers 9 in die Richtung des Schneidelements 7 begrenzt. Der in der gezeigten Ausführung als Vorsprung ausgebildete Anschlag 9b hat dabei einen Gegenanschlag 9c, der, wie in Fig. 4 gezeigt, als eine Einkerbung ausgebildet ist, die auf der Innenseite einer Seitenwand 2a des Gehäuses 2 angebracht ist.

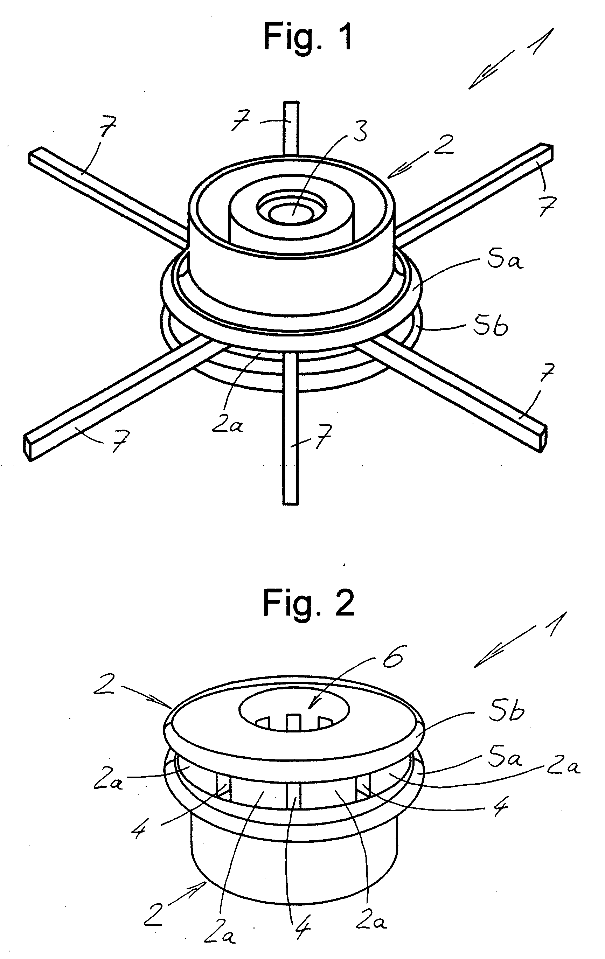

Die in den Fig. 1 bis 4 dargestellte Ausführungsbeispiel des Schneidkopfes 1 weist sechs Schneidelemente auf, die gleichmäßig am Umfang des Schneidkopfes 1 verteilt angeordnet sind. Jedes Schneidelement 7 ist mit jeweils zwei Klemmkörpern 9 am Schneidkopf 1 befestigt. Die Schneidelemente 7 erstrecken sich dabei aus Austrittsöffnungen 4, die in der Seitenwand 2a des Gehäuses 2 angeordnet sind, radial nach außen. Dabei können die Schneidelemente etwa zwischen einhundertfünfzig und einhundertsechzig Millimeter lang sein.

Die Fig. 1, 2 und 3 zeigen, dass das Gehäuse 2 am Außenumfang umlaufend zwei Schutzränder 5a und 5b aufweist, die radial über die Seitenwand 2a überstehen und axial benachbart an beiden Seiten der Austrittsöffnungen 4 angeordnet sind. Dabei ist der radiale Überstand der Schutzränder 5a und 5b über die Seitenwand 2a mit ihren Austrittsöffnungen so groß, dass er mindestens dem Querschnitt der Schneidelemente 7 entspricht. Die sich zwischen diesen Schutzrändern 5a und 5b aus den Austrittsöffnungen 4 radial nach außen erstreckenden Schneidelemente 7 können sich dadurch im Falle eines seitlichen Anstoßens des Schneidkopfes 1 an ein Hindernis zwischen die Schutzränder 5a und 5b an die Seitenwand 2a anlegen, ohne abgeknickt oder abgeschert zu werden, da die Schutzränder 5a und 5b radial weiter nach außen überstehen als die an der Seitenwand 2a anliegenden Schneidelemente 7.
Die Außenränder 4a der Austrittsöffnungen 4 sind dabei abgerundet, um die Knickbelastung der Schneidelemente 7 bei deren Anliegen an die Seitenwand 2a möglichst gering zu halten.

In Fig. 2 ist dargestellt, dass die in Betriebsstellung nach unten weisende Seite des Schneidkopfes 1 in einem Bereich 6, der sich innen anschließend an die Klemmvorrichtungen 8, durch eine Gehäusewand von ihnen getrennt, befindet, offen ist und die darin radial nach innen überstehenden Enden der Schneidelemente 7 frei zugänglich sind. Die Schneidelemente 7 ragen dabei aus Öffnungen in der Gehäusewand in diesen freien Bereich 6 hinein und können dadurch dort von Hand erfasst und aus den Klemmvorrichtungen 8 gezogen werden oder aber durch Einführen eines neuen Schneidelementes 7 von außen durch die Austrittsöffnungen 4 in die Klemmvorrichtungen 8 in den freien Bereich 6 und dadurch aus dem Schneidkopf 1 heraus nach unten fallen.

## Patentansprüche

1. Schneidkopf (1) für Motorsensen, der einen Anschluss (3) zum Verbinden mit einem Dreh-Antrieb aufweist, mit einem Schneidkopf-Gehäuse (2) und mit einem oder mehreren Schneidelementen (7) und mit wenigstens einer Klemmvorrichtung (8) zum Halten von jeweils einem Schneidelement (7), wobei die Klemmvorrichtung (8) einen in Klemmrichtung federbeaufschlagten, bewegbaren Klemmkörper (9) und ein Widerlager aufweist, zwischen denen ein Schneidelement (7) festklemmbar ist und wobei die Schneidelemente (7) etwa radial außen über das Schneidkopf-Gehäuse (2) überstehen, **dadurch gekennzeichnet, dass** die Klemmvorrichtung (8) zwei zueinander bewegbare, zwischen sich ein Schneidelement (7) festklemmende Klemmkörper (9) aufweist, die jeweils in Klemmrichtung federbeaufschlagt sind.

2. Schneidkopf nach Anspruch 1, **dadurch gekennzeichnet, dass** die Klemmkörper (9) schwenkbar sind, dass die Schwenkachsen (9a) der Klemmkörper (9) etwa parallel zur Rotationsachse des Schneidkopfes (1) verlaufen und dass der Massenschwerpunkt des Klemmkörpers (9) einen geringeren Abstand zu der zum Schneidelement (7) weisenden Beaufschlagungsseite des Klemmkörpers (9) aufweist als die Schwenkachse (9a) des Klemmkörpers (9).

3. Schneidkopf nach Anspruch 1, **dadurch gekennzeichnet, dass** für die Klemmkörper (9) Führungselemente (12a, 12b, 12c) vorgesehen sind und dass die Klemmkörper (9) durch die Führungselemente (12a, 12b, 12c) verschiebbar gelagert sind.

4. Schneidkopf nach Anspruch 3, **dadurch gekennzeichnet, dass** die Längsachse der Führungselemente (12a, 12b, 12c) schräg, vorzugsweise etwa 45° zur Längsachse der Schneidelemente (7) verläuft.

5. Schneidkopf nach einem der Ansprüche 3 oder 4, **dadurch gekennzeichnet, dass** die Führungselemente jeweils durch ein Langloch (12b) sowie einen in das Langloch eingreifenden Führungszapfen (12a) gebildet sind.

6. Schneidkopf nach Anspruch 5, **dadurch gekennzeichnet, dass** sich das Langloch (12b) in dem Klemmkörper, (9) befindet und dass der Führungszapfen (12a) mit dem Gehäuse (2) verbunden ist.

7. Schneidkopf nach Anspruch 5, **dadurch gekennzeichnet, dass** sich das Langloch im Gehäuse (2) befindet und dass der Führungszapfen (12a) mit dem Klemmkörper (9) verbunden ist.

8. Schneidkopf nach einem der Ansprüche 3 oder 4, **dadurch gekennzeichnet, dass** die Führungselemente durch jeweils zwei parallele, zwischen sich den Klemmkörper (9) führende Begrenzungen (12c) gebildet sind.

9. Schneidkopf nach einem der Ansprüche 3 oder 4, **dadurch gekennzeichnet, dass** die Führungselemente durch jeweils zwei parallele Nuten sowie in die Nuten eingreifende Führungszapfen gebildet sind.

10. Schneidkopf nach einem Ansprüche 1 bis 9, **dadurch gekennzeichnet, dass** die Klemmkörper (9) an ihrer Beaufschlagungsseite profiliert sind und vorzugsweise quer zur Längserstreckung des zu haltenden Schneidelements (7) Zähne oder Rillen oder dergleichen Profilierungen aufweisen.

11. Schneidkopf nach einem der Ansprüche 1 bis 10, **dadurch gekennzeichnet, dass** die Klemmkörper (9) mit ihren profilierten Beaufschlagungsseiten in Klemmstellung formschlüssig in das Schneidelement (7) eingreifen.

12. Schneidkopf nach einem der Ansprüche 1 bis 11, **dadurch gekennzeichnet, dass** die Klemmkörper (9) durch Druckfedern (10) auf der vom Schneidelement (7) abweisenden Seite beaufschlagt sind und dass für die Druckfedern (10) zweier Klemmkörper (9), deren vom Schneidelement (7) abweisende Seiten zueinander weisen, eine gemeinsame Federabstützung (11) vorgesehen ist.

13. Schneidkopf nach einem der Ansprüche 1, 2 oder 10 bis 12, **dadurch gekennzeichnet, dass** ein Anschlag (9b, 9c) für die Klemmkörper (9) zur Begrenzung der Schwenkbewegung der Klemmkörper (9) jeweils zum Schneidelement (7) hin vorgesehen ist.

14. Schneidkopf nach einem der Ansprüche 1 bis 13, **dadurch gekennzeichnet, dass** mehrere, insbesondere sechs Schneidelemente (7) mit jeweils zwei Klemmkörpern (9), gleichmäßig am Umfang des Schneidkopfes (1) verteilt, angeordnet sind.

15. Schneidkopf nach einem der Ansprüche 1 bis 14, **dadurch gekennzeichnet, dass** sich die Schneidelemente (7) aus Austrittsöffnungen (4) in einer Seitenwand (2a) des Gehäuses (2) etwa radial nach außen, insbesondere etwa einhundertfünfzig bis einhundertsechzig Millimeter erstrecken.

16. Schneidkopf nach einem der Ansprüche 1 bis 15, **dadurch gekennzeichnet, dass** das Gehäuse (2) am Außenumfang umlaufend wenigstens einen Schutzrand (5) aufweist, der radial über die Seitenwand (2a) mit ihren Austrittsöffnungen (4) für die Schneidelemente (7) übersteht.

17. Schneidkopf nach Anspruch 16, **dadurch gekennzeichnet, dass** zwei radial überstehende Schutzränder (5a, 5b) vorgesehen sind, die axial benachbart an beiden Seiten der Austrittsöffnungen (4) angeordnet sind.

18. Schneidkopf nach einem der Ansprüche 1 bis 17, **dadurch gekennzeichnet, dass** der radiale Überstand des oder der Schutzränder (5a, 5b) über die Seitenwand (2a) mit ihren Austrittsöffnungen (4) mindestens etwa dem Querschnitt der Schneidelemente (7) entspricht.

19. Schneidkopf nach einem der Ansprüche 1 bis 18, **dadurch gekennzeichnet, dass** die Außenränder (4a) der Austrittsöffnungen (4) in der Seitenwand (2a) abgeschrägt oder abgerundet sind.

20. Schneidkopf nach einem der Ansprüche 1 bis 19, **dadurch gekennzeichnet, dass** die Schneidelemente (7) aus glasfaserverstärktem Kunststoff bestehen.

21. Schneidkopf nach einem der Ansprüche 1 bis 20, **dadurch gekennzeichnet, dass** die das Gehäuse (2) des Schneidkopfes (1) bildenden Teile aus Kunststoff bestehen.

22. Schneidkopf nach einem der Ansprüche 1 bis 21, **dadurch gekennzeichnet, dass** die Klemmkörper (9) aus Leichtmetall, insbesondere aus Aluminium bestehen.

23. Schneidkopf nach einem der Ansprüche 1 bis 22, **dadurch gekennzeichnet, dass** die in Betriebsstellung nach unten weisende Seite des Schneidkopfes (1) in einem Bereich (6), der sich nach innen radial beabstandet oder anschließend an die Klemmvorrichtungen (8) befindet, offen ist und die darin radial nach innen überstehenden Enden der Schneidelemente (7) zugänglich sind.
